# EUROPÄISCHE PATENTSCHRIFT

(11) **EP 1 998 011 B1**
(45) Veröffentlichungstag und Bekanntmachung des Hinweises auf die Patenterteilung: **16.09.2015**
(21) Anmeldenummer: 08103873.9
(22) Anmeldetag: 08.05.2008
(51) Int. Cl.: F01D 25/18, B64C 1/14

(54) **Entlüftung für das Schmierölsystem eines Strahltriebwerks**
Vent for the lubricating oil system of a turbojet engine
Aération pour le système d'huile de graissage d'un moteur à réaction

(30) Priorität: 01.06.2007 DE 102007026060
(43) Veröffentlichungstag der Anmeldung: 03.12.2008
(73) Patentinhaber: Rolls-Royce Deutschland Ltd & Co KG, 15827 Blankenfelde-Mahlow (DE)
(72) Erfinder: Negulescu, Dimitrie, 14163, Berlin (DE); McIntosh, Alastair, 10785 Berlin (DE)

(56) Entgegenhaltungen:
- EP-A1- 0 439 923
- GB-A- 2 376 269
- US-A- 5 776 229
- US-A1- 2006 027 707

## Beschreibung

Die Erfindung betrifft eine Entlüftung für das Schmierölsystem eines Strahltriebwerks, die eine von einer Entlüftungsvorrichtung ausgehende Entlüftungsleitung mit im Freien endender Luftauslassöffnung umfasst.

In den Lagergehäusen von Strahltriebwerken vermischt sich das Schmieröl mit Sperrluft, die aus dem in den Öltank zurückgeführten Schmieröl mit Hilfe einer Entlüftungsvorrichtung abgetrennt und über einen Luftauslass ins Freie geleitet wird. Bevor die Luft in die Atmosphäre ausgeblasen wird, sollen zwar möglichst alle Öltröpfchen aus dieser entfernt sein. Dennoch enthält die ausgeblasene Luft aber noch Ölbestandteile.

Das Ausblasen der abgetrennten Luft ins Freie erfolgt gemäß einer bekannten Ausführungsvariante außerhalb der Gondel über einen aerodynamisch verkleideten Luftauslass an einer Position mit möglichst geringem Gegendruck. Abgesehen von dem durch den Auslass bedingten Widerstand während des Fluges ist diese Variante auch insofern nachteilig, als sowohl im Stand als auch während des Rollens und beim Start eine unerwünschte sichtbare Rauchfahne erzeugt wird.

Eine derartige Ausführung ist beispielsweise in der EP 0 439 923 A1 beschrieben, aus der ein im Bereich einer Gondel eines Gasturbinentriebwerks angeordneter Entlüftungsauslass hervorgeht. Ober den Entlüftungsauslass wird ein Luft-Öl-Gemisch von einem Bereich innerhalb der Gondel in einen Bereich außerhalb der Gondel geführt, wobei das Luft-Öl-Gemisch über einen endseitig einen Ausströmauslass aufweisenden Kanal an die Umgebung abgegeben wird.

Gemäß einer noch anderen bekannten Ausführungsform kann der Luftauslass auch hinter dem Düsenhals, das heißt am Ende einer Verlängerung des Niederdruckturbinenkonus vorgesehen sein. Diese Art des Luftauslasses ist nur für Triebwerke mit kurzer Düse geeignet und erfordert ein komplex ausgelegtes Ölsystem mit wellenkonzentrischer Entlüftung durch die rotierenden Wellen und ist daher kostenaufwendig und schwer.

Weiterhin ist aus der US 2006/027707 A1 ein Flugzeugstrahltriebwerk bekannt, das mit einer hinteren sekundären Struktur verbunden ist. Im Bereich einer Verkleidung, die sich in unmittelbarer Nähe der Hinterseite des Strahltriebwerks befindet, ist ein Ablaufkanal vorgesehen, über den Leckageflüssigkeit abführbar ist.

Der Erfindung liegt die Aufgabe zugrunde, den Luftauslass der Entlüftung für das Schmiersystem eines Strahltriebwerks konstruktiv einfach so auszubilden, dass zum einen die Entlüftungsabgase nicht sichtbar sind und zum anderen der während des Fluges durch die Installation des Auslasses bedingte Widerstand gering ist.

Erfindungsgemäß wird die Aufgabe mit einer gemäß den Merkmalen des Patentanspruchs 1 ausgebildeten Entlüftung für das Ölschmiersystem eines Strahltriebwerks gelöst. Zweckmäßige Weiterbildungen der Erfindung sind Gegenstand der Unteransprüche.

Der Grundgedanke der Erfindung besteht in der Anordnung der Luftauslassöffnung der mit einer Entlüftungsvorrichtung des Ölsystems verbundenen Entlüftungsleitung hinter dem Düsenhals an einer beliebigen Stelle in Bezug auf den Umfang des austretenden Triebwerkstrahls, nämlich tangential zu diesem. Der so angeordnete Luftauslass ist konstruktiv einfach, kostengünstig und gewichtssparend ausgebildet und gewährleistet eine saubere, nicht sichtbare Luftabführung aus der Ölentlüftungsvorrichtung.

Eine aerodynamische Verkleidung der Entlüftungsleitung, für die größtenteils die übliche, gegebenenfalls durch eine Zusatzverkleidung verlängerte Aufhängungsverkleidung des Triebwerks genutzt werden kann, sorgt bei geringem Kostenaufwand für einen niedrigen Installationswiderstand.

In weiterer Ausbildung der Erfindung ist am Rand der Luftauslassöffnung und/oder an der Hinterkante der Aufhängungsverkleidung oder der Zusatzverkleidung eine Ölabtropfkante ausgebildet, die im Stand des Flugzeugs ein Verlaufen von Öl und damit eine diesbezügliche Verschmutzung des Flugzeugs verhindert.

Gemäß einem weiteren wichtigen Merkmal der Erfindung sind die Luftauslassöffnung und der Krümmer in Strömungsrichtung des Triebwerksstrahls aerodynamisch geformt.

Ein Ausführungsbeispiel der Erfindung wird anhand der Zeichnung näher erläutert. Es zeigen:
- Fig. 1: die Strahlaustrittsseite der Düse eines Strahltriebwerks mit der Verkleidung für die Triebwerksaufhängung und dem Luftauslass des Ölsystems; und
- Fig. 2: eine schematische Darstellung von drei Varianten zur Anordnung des Luftauslasses und dessen aerodynamischer Verkleidung.

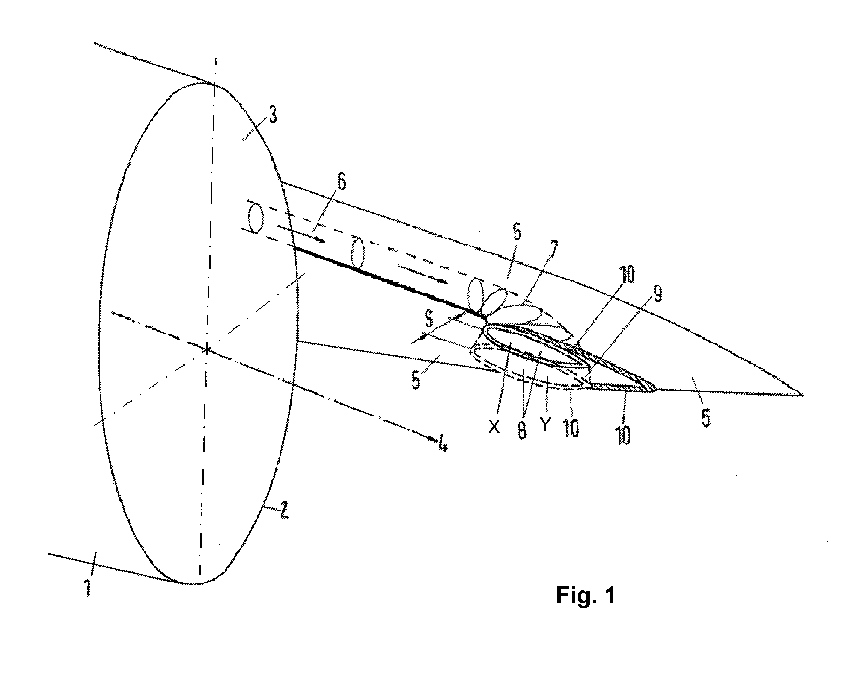

Fig. 1 zeigt schematisch einen Teil der Gondel 1 des Triebwerks mit dem Düsenhals 2 und dem aus der Düsenöffnung 3 (Strahlaustrittsöffnung) austretenden, mit dem Pfeil 4 angedeuteten Triebwerksstrahl. Das Triebwerk ist hier zur Befestigung in der Drei-Uhr-Position am Rumpf eines Flugzeugs vorgesehen. Die Aufhängung (nicht dargestellt) des Triebwerks ist zur Verminderung des Luftwiderstands durch eine - in der vorliegenden Ausführungsform - lange, sich über die Strahlaustrittsöffnung 3 hinaus erstreckende Aufhängungsverkleidung 5 (Pylon) abgedeckt. Eine Entlüftungsleitung 6 des Schmierölsystems des Triebwerks ist aus der Gondel 1 heraus und im Schutz der langen Aufhängungsverkleidung 5 bis hinter die Düsenöffnung 3 geführt und endet in einem - zum Triebwerksstrahl hin gekrümmten - Krümmer 7, dessen Luftauslassöffnung 8 am bzw. im Triebwerksstrahl mündet. Die Öffnungsebene der Luftauslassöffnung 8 des Krümmers 7 ist - aerodynamisch vorteilhaft - tangential zur Strömungsrichtung bzw. zum Umfang des Triebwerksstrahls ausgerichtet und verläuft bevorzugt tangential am Umfangsrand des Triebwerksstrahls 4 (Pfeil X) oder taucht geringfügig - mit einer Tiefe s - in den Randbereich des Triebwerksstrahls ein (Pfeil Y).

Diese Anordnung und Ausbildung des Luftauslasses der Entlüftung ist konstruktiv einfach und kostengünstig und erzeugt darüber hinaus während des Fluges keinen zusätzlichen Luftwiderstand. Die Abluft des Ölsystems wird in den Triebwerksstahl eingebracht, so dass im Stand oder während des Rollens oder Startens des Flugzeugs keine Rauchfahne erzeugt wird.

Wie Fig. 1 zeigt, ist an den umlaufenden Rand der Luftauslassöffnung 8 des in den Triebwerksstrahl 4 hinein reichenden Verlängerungsstücks 9 des Krümmers 7 oder an der Hinterkante der Aufhängungsverkleidung 5 eine Ölabtropfkante 10 zum Ableiten von Öltröpfchen bzw. Abreißen des Ölflusses angeformt, so dass im Stillstand des Flugzeugs dessen Verschmutzung durch Öl verhindert wird.

Die Erfindung ist nicht auf die zuvor anhand der Fig. 1 beschriebene Ausführungsform bei einem auf der linken Seite des Flugzeugrumpfes aufgehängten Triebwerk mit langer Aufhängungsverkleidung beschränkt. Im Rahmen des Grundgedankens der Erfindung, der in der tangential bzw. tangential eintauchend zum Umfang des Triebwerksstrahls an beliebiger Stelle mündenden Anordnung der Luftauslassöffnung im Schutz einer aerodynamischen Verkleidung besteht, sind verschiedene Modifikationen denkbar.

Bei einer Aufhängung des Triebwerks an der Unterseite der Tragfläche des Flugzeugs kann die Entlüftungsleitung mit der zur Triebwerksstrahlrichtung parallelen Luftauslassöffnung - geschützt von der entsprechenden Aufhängungsverkleidung - in der Zwölf-Uhr-Position angeordnet sein.

Bei einer noch anderen Triebwerksinstallation am Rumpf des Flugzeuges, die eine kurze, nicht über die Düsenöffnung hinaus reichende Aufhängungsverkleidung aufweist, ist für den Teil der Entlüftungsleitung und des Krümmers in der Drei-Uhr- oder Neun-Uhr-Position eine zusätzliche Verkleidung angeordnet, an der auch eine Abtropfkante zum Abreißen des Ölflusses (Abtropfen) ausgebildet sein kann.

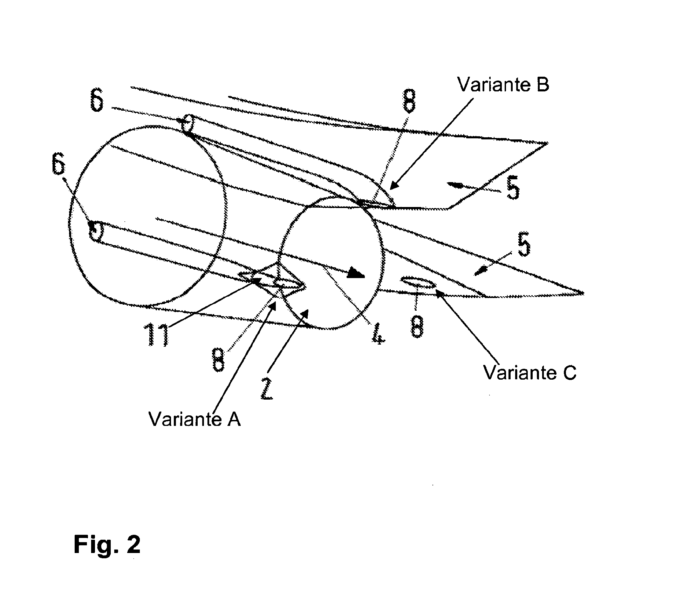

Die in Fig. 2 wiedergegebene Variante B zeigt eine zwischen der Gondel des Triebwerks und einer Tragfläche des Flugzeugs vorgesehene Aufhängungsverkleidung 5, die über den hinteren Rand (die Strahlaustrittsöffnung 3) des Düsenhalses 2 hinaus ragt und in deren Schutz die Entlüftungsleitung 6 mit der den Triebwerksstrahl tangierenden Luftauslassöffnung 8 in der Zwölf-Uhr-Position verläuft.

Gemäß Variante C befindet sich die Luftauslassöffnung 8 im Bereich der in Fig. 1 dargestellten, mit dem Flugzeugrumpf verbundenen langen Aufhängungsverkleidung 5 hinter der Strahlaustrittsöffnung 3 in der Drei-Uhr-Position.

Die Variante A ist für Triebwerksaufhängungen vorgesehen, die nur eine kurze, sich nicht über das Ende des Düsenhalses 2 erstreckende Aufhängungsverkleidung aufweisen. In diesem Fall ist an der Gondel 1 eine Zusatzverkleidung 11 angebracht, in deren Schutz die Luftauslassöffnung 8 den Triebwerksstrahl 4 an der Umfangsfläche tangiert.

### Bezugszeichenliste

- 1: Gondel des Triebwerks
- 2: Düsenhals
- 3: Strahlaustrittsöffnung (Düsenhalsöffnung)
- 4: Triebwerksstrahlaustrittsrichtung, Triebwerksstrahl
- 5: Aufhängungsverkleidung
- 6: Entlüftungsleitung
- 7: Krümmer von 6
- 8: Luftauslassöffnung von 7
- 9: Verlängerungsstück von 7
- 10: Ölabtropfkante
- 11: Zusatzverkleidung
- Pfeil X: tangierende Luftauslassöffnung
- Pfeil Y: eintauchende Luftauslassöffnung

## Patentansprüche

1. Entlüftung für das Schmierölsystem eines Strahltriebwerks, der eine von einer Entlüftungsvorrichtung ausgehende Entlüftungsleitung (6) mit im Freien endender Luftauslassöffnung (8) umfasst, **dadurch gekennzeichnet, dass** die Entlüftungsleitung (6) im Schutze einer am Triebwerk vorgesehenen aerodynamischen Verkleidung (5, 11) bis hinter die Strahlaustrittsöffnung (3) am Düsenhals (2) des Triebwerks geführt ist und die Ebene der Luftauslassöffnung (8) am Umfang parallel zum Triebwerksstrahl (4) - tangential (Pfeil X) oder in dessen randnahen Bereich eintauchend (Pfeil Y) - angeordnet ist.

2. Entlüftung nach Anspruch 1, **dadurch gekennzeichnet, dass** die Verkleidung eine zur Aufhängung des Triebswerks am Rumpf oder den Tragflächen des Flugzeugs vorgesehene, über das Ende des Düsenhalses (2) hinaus reichende lange Aufhängungsverkleidung (5) oder eine Zusatzverkleidung (11) zur Verlängerung einer kurzen Aufhängungsverkleidung ist.

3. Entlüftung nach Anspruch 1 oder 2, **dadurch gekennzeichnet, dass** am Aussenumfang der Luftauslassöffnung (8) und/oder an der Hinterkante der Aufhängungsverkleidung (5) oder der Zusatzverkleidung (11) eine Ölabtropfkante (10) ausgebildet ist.

4. Luftauslass nach Anspruch 1, **dadurch gekennzeichnet, dass** der Übergang von der Entlüftungsleitung (6) zur Luftauslassöffnung (8) über einen Krümmer (7) erfolgt.

5. Luftauslass nach Anspruch 1 oder 4, **dadurch gekennzeichnet, dass** die Luftauslassöffnung (8) und der Krümmer (7) in Strömungsrichtung des Triebwerksstrahls aerodynamisch geformt sind.

6. Luftauslass nach Anspruch 1, **dadurch gekennzeichnet, dass** die Luftauslassöffnung (8) in Umfangsrichtung an einer beliebigen Stelle am/im Triebwerksstahl mündet oder entsprechend der Triebwerksaufhängung an den Tragflächen oder am Rumpf des Flugzeugs in einer Zwölf-bzw. Drei- oder Neun-Uhr-Position angeordnet ist.

## Claims

1. Air vent for the lube oil system of a jet engine, comprising an air vent conduit (6) that leads on from an air vent device and has an air outlet opening (8) which ends in the open, **characterized in that** the air vent conduit (6) is guided up to behind the jet outlet opening (3) at the nozzle throat (2) of the engine as it is being protected by an aerodynamic sheathing (5, 11) which is provided at the engine, and **in that** the plane of the air outlet opening (8) is arranged at the circumference in parallel to the engine jet (4), namely either tangentially (X arrow) or so as to reach into its edge area (Y arrow).

2. Air vent according to claim 1, **characterized in that** the sheathing is a long suspension sheathing (5) which is provided for the purpose of suspending the engine at the fuselage or at the wings of the airplane and which is jutting out beyond the end of the nozzle throat (2), or it is an additional sheathing (11) for the purpose of extending a short suspension sheathing.

3. Air vent according to claim 1 or 2, **characterized in that** an oil drain drip edge (10) is formed at the outer circumference of the air outlet opening (8) and/or at the trailing edge of the suspension sheathing (5) or the additional sheathing (11).

4. Air outlet according to claim 1, **characterized in that** the transition from the air vent conduit (6) to the air outlet opening (8) is realized by means of an bend (7).

5. Air outlet according to claim 1 or 4, **characterized in that** the air outlet opening (8) and the bend (7) are formed in an aerodynamic manner in the flow direction of the engine jet.

6. Air outlet according to claim 1, **characterized in that**, in the circumferential direction, the air outlet opening (8) ends at any position at/in the engine jet or is arranged corresponding to the engine mounting at the wings or at the fuselage of the airplane in a twelve or three or nine o'clock position.

## Revendications

1. Ventilation pour le système d'huile de lubrification d'un moteur à réaction comprenant une conduite de ventilation (6) partant d'un dispositif de ventilation avec une sortie d'air (8), **caractérisée en ce que** la conduite de ventilation (6) passe sous un revêtement aérodynamique (5, 11) placé sur le réacteur jusqu'à l'ouverture de sortie du faisceau (3) sur le col de tuyère (2) du réacteur, et que la sortie d'air (8) est disposée à une hauteur parallèle au faisceau du réacteur (4) - de façon tangentielle (flèche X) ou plongeant à proximité de son rebord (flèche V).

2. Ventilation selon la revendication 1, **caractérisée en ce que** le revêtement est un long revêtement de suspension (5) du réacteur à la coque ou aux surfaces portantes de l'avion qui est en saillie par rapport au col de tuyère (2) ; ou un surrevêtement (11) pour rallonger un revêtement de suspension court.

3. Ventilation selon l'une des revendications 1 ou 2, **caractérisée en ce qu'**un rebord d'égouttage d'huile (10) est formé sur le pourtour de la sortie d'air (8) et/ou sur le rebord du revêtement de suspension (5) ou du surrevêtement (11).

4. Sortie d'air selon la revendication 1, **caractérisée en ce que** le passage de la conduite de ventilation (6) à la sortie d'air (8) est effectué via un coude progressif (7).

5. Sortie d'air selon les revendications 1 ou 4, **caractérisée en ce que** la sortie d'air (8) et le coude progressif (7) sont formés de façon aérodynamique dans la direction de circulation du faisceau du réacteur.

6. Sortie d'air selon la revendication 1, **caractérisée en ce que** l'ouverture de sortie d'air (8) débouche dans la direction circonférentielle à un endroit quelconque sur/dans le faisceau du réacteur, ou qu'elle est disposée conformément à la suspension du réacteur sur les surfaces portantes ou sur la coque d'un avion en position de 12, 3 ou 9 heures.
